Europäisches Patentamt

(19) European Patent Office

Office européen des brevets

(11) Publication number: **0 096 473**
**B1**

(12) **EUROPEAN PATENT SPECIFICATION**

(45) Date of publication of patent specification: **20.08.86**

(21) Application number: **83302686.7**

(22) Date of filing: **11.05.83**

(51) Int. Cl.⁴: **H 04 M 19/00, H 04 Q 3/00**

(54) **Active impedance line feed circuit.**

(30) Priority: **04.06.82 CA 404502**

(43) Date of publication of application:
**21.12.83 Bulletin 83/51**

(45) Publication of the grant of the patent:
**20.08.86 Bulletin 86/34**

(84) Designated Contracting States:
**AT DE FR GB IT NL SE**

(56) References cited:
**EP-A-0 022 561**
**EP-A-0 046 588**

**IEEE JOURNAL OF SOLID-STATE CIRCUITS,
vol. SC-16, no. 4, August 1981, pages 261-266,
IEEE, New York, USA D.W. AULL et al.: "A
high-voltage IC for a transormerless trunk and
subscriber line interface"**

(73) Proprietor: **NORTHERN TELECOM LIMITED
1600 Dorchester Boulevard West
Montreal Quebec H3H 1R1 (CA)**

(72) Inventor: **Rosembaum, Stanley Daniel
2074 Woodcrest Road
Ottawa Ontario, K1H 6H8 (CA)**
Inventor: **Handforth, Martin Ridgway
3 Jackson Court
Kanata Ontario, K2K 1B6 (CA)**

(74) Representative: **Crawford, Andrew Birkby et al
A.A. THORNTON & CO. Northumberland House
303-306 High Holborn
London WC1V 7LE (GB)**

## Description

The invention relates to interface circuits for communication lines and particularly to a line circuit for supplying energizing current and a.c. signals to a pair of leads in a communication line.

In telephony, a subscriber loop is typically provided by a communication line having a pair of leads for connecting a remote station set to the telephone network. The communication line is terminated at a line circuit which has traditionally included a transformer having windings for coupling a.c. signals between the communication line and a port associated with a telephone switching facility in the telephone network. One of the windings in the transformer, often a split winding, is connected to the pair of leads and usually provides a d.c. path for supplying energizing current to the communication line. Supervisory circuitry usually associated with the line circuit is responsive to variations in the flow of energizing current to indicate ON HOOK and OFF HOOK conditions at the station set, and to detect dial pulses transmitted by the station set. As the transformer tends to be the most expensive element in a line circuit, it has been a long standing objective of telephony circuit designers to either reduce the size of the transformer or eliminate it altogether.

Numerous designs of transformerless line circuits have been published. Most of these designs either fall short of providing a workable interface for all subscriber line situations or alternately are exceedingly difficult and expensive to manufacture. However many of these designs are practical for average and short length loop applications particularly in relation to private branch exchange situations in which loop circuits are characteristically shorter and less exposed to the natural elements than in the typical central office situation.

Attention is directed to EP—A—0046588 which relates generally to a subscriber line interface circuit for a two-wire telecommunications line. One embodiment of the circuit utilises resistors connected in combination to define voltage dividers with tip and ring voltage taps. The tip voltage tap is connected to one amplifier while the ring voltage tap is connected to a second amplifier. Both amplifiers are controlled via a coupling which is strictly an a.c. coupling due to the presence of d.c. blocking capacitors.

An article by Aull et al in IEEE Journal of Solid-State Circuits Vol. SC-16, No. 4 August 1981 relates to the use of high-voltage, junction isolated, complementary bipolar technology to fabricate an IC for a transformerless trunk and subscriber line interface and discloses separate a.c. and d.c. feedback blocks which are not disclosed in detail but the d.c. feedback block is shown as having a battery related reference.

The present invention provides a telephone line circuit including: first and second feed resistors for supplying an energizing direct current from outputs of first and second differential amplifiers to respective tip and ring terminals of a telephone line, a first voltage divider being connected between the ring terminal and the output of the first differential amplifier and defining a first voltage tap, and a second voltage divider being connected between the tip terminal and the output of the second differential amplifier and defining a second voltage tap,

a control means being coupled to the differential amplifiers for causing the differential amplifiers to operate with a predetermined voice band output impedance, the control means including an amplifier having a differential input being connected across the voltage taps and an a.c. feedback network, whereby the predetermined voice band output impedance is a function of resistance values of the voltage dividers and an impedance of the a.c. feedback networks; characterised in that: the control means is direct current coupled between the voltage taps and the differential amplifiers and includes a d.c. feedback network, whereby the differential amplifiers are also caused to operate with a predetermined d.c. output resistance, the output resistance being a function of the resistance values of the voltage taps and the d.c. feedback network.

In use, the control circuit is connected via differential inputs to the voltage taps to provide common mode rejection of a.c. signals which may be induced along the length of a two wire transmission line. In order to obtain a significant degree of common mode rejection, the ohmic values of the tip and ring feed resistances are closely matched. For example, a tolerance of 0.1% is preferred for private branch exchange uses, and a more exact tolerance of 0.05% is preferred in cases where extreme longitudinal a.c. signals may be encountered, such as in uses with central office exchanges. Also resistance values in respective arms of the tip and ring voltage dividers are preferably matched to within 0.1%.

In one example of the invention common mode rejection of longitudinal a.c. signals on the transmission line is improved by including tip and ring feedback networks bridging the respective tip and ring feed resistors. The feedback networks include arms of matched resistance values, preferably within 1.0%. Voltage taps of the respective feedback networks are connected to inputs of the respective tip and ring voltage amplifiers. This improvement has the effect of reducing a common mode rejection performance requirement of the control circuit to that very easily obtainable from currently available differential amplifiers.

Example embodiments are described in the following with reference to the accompanying drawings in which:

Figure 1 is a schematic and block illustration of a line circuit in accordance with the invention;

Figure 2 is a schematic diagram of a line circuit in accordance with the line circuit illustrated in Figure 1; and

Figure 3 is a schematic diagram of a modification of the line circuit illustrated in Figure 2.

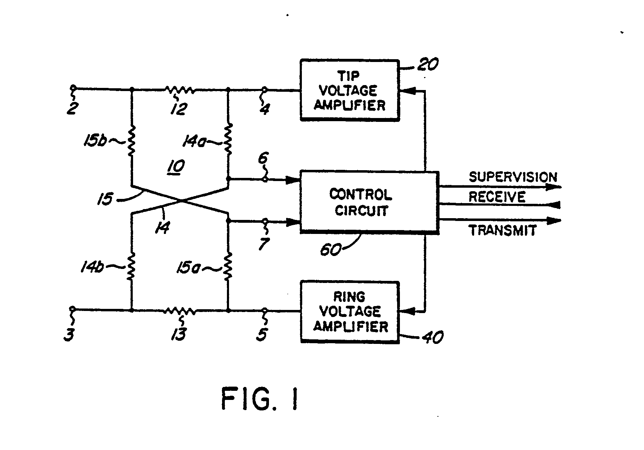

Referring to Figure 1, the line circuit includes a tip voltage amplifier 20, a ring voltage amplifier 40, a control circuit 60 and a resistance network 10. The control circuit 60 includes supervision, receive and transmit leads for communicating with a communication facility, not shown. The resistance network 10 is connected to tip and ring terminals 2 and 3 being provided for connection to a two wire transmission line which is used to couple a remote telephone set or the like, not shown, to the line circuit. The resistance network 10 includes tip and ring feed terminals 4 and 5 connected to outputs of the tip and ring voltage amplifiers 20 and 40, and tip and ring voltage taps 6 and 7 connected to inputs of the control circuit 60. A tip feed resistor 12 is connected in series between the tip terminal 2 and the tip feed terminal 4. A ring feed resistor 13 is connected in series between the ring terminal 3 and the ring feed terminal 5. The resistors 12 and 13 are closely matched and each has an ohmic value of usually not more than one quarter of the lowest d.c. feed resistance required for a range of transmission line characteristics. A tip voltage divider 14 includes resistors 14a and 14b connected in series between a feed side of the tip feed resistor 12 adjacent the tip feed terminal 4, and a line side of the ring feed resistor 13 adjacent the ring terminal 3. The voltage tap 6 is defined by a junction of the resistors 14a and 14b. A ring voltage divider 15 includes resistors 15a and 15b connected in series between a feed side of the ring feed resistor 13 adjacent the ring feed terminal 5, and a line side of the tip feed resistor 12 adjacent the tip terminal 2. The ring voltage tap 7 is defined by a junction of the resistors 15a and 15b. The values of the resistors in the tip and ring voltage dividers 14 and 15 are closely matched in a range of about 1,000 to 10,000 times greater than the values of the feed resistors 12 and 13, but are not necessarily limited to this range. In the example embodiment described the feed resistors are closely matched at about 100 ohms and the voltage divider resistors are all closely matched at about 330 K ohms.

In operation, the telephone set being in an OFF HOOK condition, a current path is completed between the tip and ring terminals 2 and 3. An energizing direct current flows between the outputs of the voltage amplifiers 20 and 40, via the current path. The control circuit 60 responds to voltages being developed across the feed resistors 12 and 13 and coupled thereto via the tip and ring voltage dividers 14 and 15 to control operation of the tip and ring voltage amplifiers 20 and 40. The tip and ring voltage amplifiers 20 and 40 are thus caused to insert voltage drops in series with the voltage drops occurring across the tip and ring feed resistors 12 and 13. Thus the output resistance of each of the voltage sources 20 and 40 is raised with respect to low values they would have in the absence of control signals from the control circuit 60, such that the series feed resistance of the line circuit is adjusted to suit a wide range of the transmission line resistances.

The controller also performs functions of providing ON HOOK, OFF HOOK, and dial pulsing indications on the supervision lead.

Alternating current voice band signals intended to be received by the telephone set in the OFF HOOK condition are applied at the receive lead. These signals are propagated along the transmission line under the control of the control circuit 60 which causes the effective output resistances of the tip and ring voltage amplifiers 20 and 40 to be correspondingly varied, and these operate a voice receiver in the OFF HOOK telephone set. Alternating current signals being propagated from a transmitter, in the OFF HOOK telephone set are received via the transmission line and the tip and ring voltage taps 6 and 7. Both the transmitter propagated a.c. signals, and the receiver destined a.c. signals, modulate the energizing current flows in the respective tip and ring feed resistors 12 and 13, and cause corresponding differential a.c. voltage signal components to appear at the tip and ring voltage taps 6 and 7. The control circuit 60 responds to the differential a.c. voltage signal components by generating similar a.c. signals on the transmit lead. Separation of the transmitter propagated a.c. signal component from the receiver destined a.c. signal component for transmission through the associated telephone facility may be achieved by various well known hybrid circuits designed for this purpose.

In a typical operating environment there is usually a risk that at some time an exceptionally high voltage will be coupled to the transmission line and the line circuit, as for example in an event of a lightning strike or an accidental power line cross. In order to provide suitable protection for the voltage amplifiers 20 and 40, it is preferable that protection networks be connected at the line terminals 2 and 3, or at the feed terminals 4 and 5, to provide an alternate route for currents associated with such high voltages. Various suitable protection networks are well known and may include a diode bridge arrangement. In the case where a protection network is used at the feed terminals 4 and 5, it may also be preferable that the tip and ring feed resistor be of sufficient bulk to be able to withstand the severe power dissipation often associated with a high voltage occurrence, without sustaining significant damage.

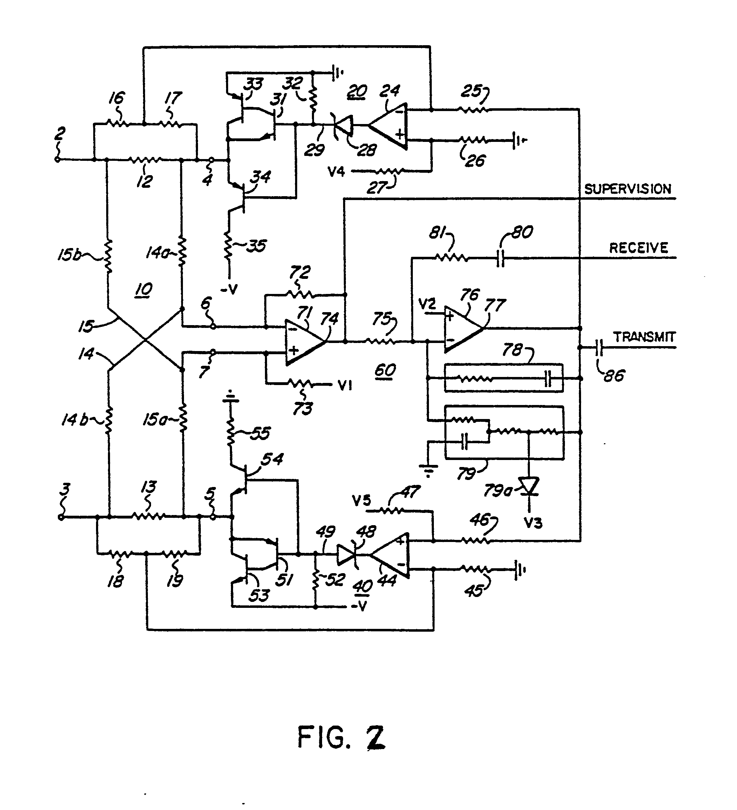

Referring to Figure 2, the illustrated line circuit provides operational advantages. Briefly some of these advantages include improved common mode rejection, individually determined a.c. termination impedance and d.c. feed resistance, current limiting for very short subscriber loop circuits and bidirectionally conductive voltage amplifiers. The resistance network 10 is the same as that illustrated in Figure 1 except for the addition of a tip feedback network which includes resistors 16 and 17 connected in series across the resistor 12, and a ring feedback network which includes resistors 18 and 19 connected in series across the resistor 13. The function of the resistors 16 and 17, and of the resistors 18 and 19, is that of providing feedback signals to the tip and ring voltage amplifiers at 20 and 40 respectively, in this structure a preferred level of common mode rejection performance of the control circuit 60 is relaxed to a performance level common to many inexpensive differential amplifier circuit types.

Considering Figure 2 in more detail, circuit elements 24 through 35, connected as shown at 20, correspond to the tip voltage amplifier 20 in figure 1, and circuit elements 44 through 55, connected as shown at 40, correspond to the ring voltage amplifier 40 in figure 1. Bias potentials V1—V5 are listed in table A and are provided by any of various means, for example voltage divider networks, which for simplicity of illustration are not shown.

### TABLE A

| V1 | .379 of −V |
|----|-----------|
| V2 | .475 of −V |
| V3 | .570 of −V |
| V4 | .379 of −V |
| V5 | .240 of −V |

The bias potentials are expressed as a decimal fraction of the potential of the power source −V. In operation, a differential amplifier 24 is inversely responsive to an input signal received via a resistor 25 and which is more negative than a bias potential at a junction of resistors 26 and 27. An output signal from the differential amplifier 24 is level shifted via a Zener diode 28 and controls a voltage source including transistors 31 and 33, and a resistor 32. In the event a longitudinally induced current at the terminal 2 becoming of sufficient opposing magnitude with respect to the d.c. energizing current flow to momentarily reverse the energizing current flow, a transistor 34 and a resistor 35 provide a current path to the power source −V. The ring voltage amplifier at 40 is of similar structure and operates in the same manner. The Zener diodes 28 and 48 are suitably provided by 10 to 15 volt devices. The level shifting function thus provided, although not essential for the line circuit does permit the use of lower voltage and hence less costly differential amplifiers than would otherwise be the case.

Circuit elements 71 through 79a, connected as shown at 60, correspond to the control circuit 60 in figure 1. A differential amplifier 71 is responsive to potential differences appearing across the tip and ring voltage taps 6 and 7 with an amount of gain as determined by the ohmic value of a resistor 72, and with an offset as introduced via a resistor 73 connected between a non inverting input of the differential amplifier and V1. The offset causes the line circuit to conduct energizing current. An output 74 of the differential amplifier 71 is connected to the supervision lead and via a resistor 75 to an inverting input of a differential amplifier 76. Signals on the receive lead are a.c. coupled via a capacitor 80 and a resistor 81 to the inverting input. An output 77 of the differential amplifier 76 is coupled to the transmit lead by a capacitor 86 and provides both the received and transmitted a.c. signals as well as a d.c. control signal for controlling the operation of both the tip and ring voltage amplifiers at 20 and 40. An a.c. feedback network 78 determines the a.c. response characteristics of the differential amplifier 76 and hence the effective a.c. terminating impedance across the terminals 2 and 3. A d.c. feedback network 79 determines the d.c. response characteristic of the amplifier 76 and hence the effective d.c. feed resistance across the terminals 2 and 3. A diode 79a, connected to the d.c. feedback network 79 causes a current limiting feed to occur on very short subscriber loops to reduce the normal operating power consumption.

In an alternate arrangement of the line circuit in figure 2 a single differential amplifier is used to provide the functions of the control circuit 60. In this arrangement, which is not shown, the functions of the networks 78 and 79 are provided by additional components directly associated with the differential amplifier 71, and the differential amplifier 76 is no longer required. Other variations of the line circuits in the drawings and which are within the scope of the invention will become apparent to persons skilled in this art.

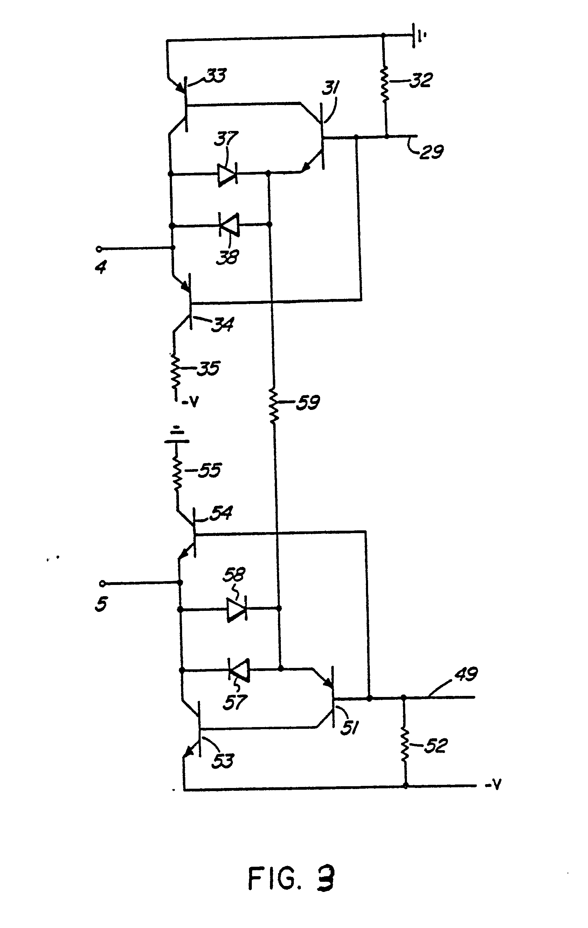

The circuit in figure 3 illustrates voltage source portions of the tip and ring voltage amplifiers 20 and 40, with circuit modifications to permit operation of the voltage amplifiers with less voltage drop with respect to ground and the −V supply potential while avoiding a saturation condition. This is done by provision of an additional current path in combination with the resistors 32 and 52 via diodes 37 and 57 and a resistor 59. Diodes 38 and 58 are included to permit operation at high line currents, for example when the currents required to be conducted at the emitters of the transistors 31 and 51 exceed the current which can be supplied by the resistor 59 being of a preferred ohmic value.

In practice the line circuits as illustrated in figures 2 or 3 are suitable for operation from a typical telephone office central battery having a potential in a range of from −45 to −55 volts, but are not limited to this range.

**Claim**

A telephone line circuit including:
first and second feed resistors (12, 13) for supplying an energizing direct current from outputs of first and second differential amplifiers (20, 40) to respective tip and ring terminals (2, 3) of a telephone line,
a first voltage divider (14) being connected between the ring terminal and the output of the first differential amplifier and defining a first voltage tap, and a second voltage divider (15) being connected between the tip terminal and the output of the second differential amplifier and defining a second voltage tap,

a control means (60) being coupled to the differential amplifiers for causing the differential amplifiers to operate with a predetermined voice band output impedance, the control means including an amplifier (71) having a differential input being connected across the voltage taps and an a.c. feedback network (78), whereby the predetermined voice band output impedance is a function of resistance values of the voltage dividers and an impedance of the a.c. feedback networks;

characterised in that:

the control means is direct current coupled between the voltage taps and the differential amplifiers and includes a d.c. feedback network (79), whereby the differential amplifiers are also caused to operate with a predetermined d.c. output resistance, the output resistance being a function of the resistance values of the voltage taps and the d.c. feedback network.

## Patentanspruch

Telefonleitungsschaltung mit:

ersten und zweiten Spiesewiderständen (12, 13) zum Zuführen eines Betriebs-Gleichstromes von Ausgängen von ersten und zweiten Differentialverstärkern (20, 40) zu jeweiligen Spitzen- und Läute-Klemmen (2, 3) einer Fernsprechleitung, einem ersten zwischen der Läute-Klemme und dem Ausgang des ersten Differentialverstärkers angeschlossenen und einen ersten Spannungsabgriff bestimmenden Spannungsteiler (14) und einem zweiten zwischen der Spitzen-Klemme und dem Ausgang des zweiten Differentialverstärkers angeschlossenen und einen zweiten Spannungsabgriff bestimmenden Spannungsteiler (15),

einem mit den Differentialverstärkern gekoppelten Steuermittel (60), um die Differentialverstärker mit einer vorbestimmten Sprachband-Ausgangsimpedanz arbeiten zu lassen, wobei die Steuermittel einen Verstärker (71) mit einem Differentialeingang enthalten, der parallel zu den Spannungsabgriffen angeschlossen ist, und ein Wechselspannungs-Rückkoppelnetz (78), wodurch die vorbestimmte Sprachband-Ausgangsimpedanz eine Funktion von Widerstandswerten der Spannungsteiler und einer Impedanz der Wechselspannungs-Rückkoppelnetze ist,

dadurch gekennzeichnet, daß:

das Steuermittel zwischen den Spannungs-abgriffen und den Differentialverstärkern gleich-strom-gekoppelt ist und ein Gleichspannungs-Rückkoppelnetz (79) enthält, wodurch die Differentialverstärker ebenfalls zum Betrieb mit einem vorbestimmten Gleichspannungs-Ausgangswiderstandswert veranlaßt werden, wobei der Ausgangswiderstand einen Funktion, der Wiederstandswerte der Spannungsabgriffe und des Gleichspannungs-Rückkoppel-netzes ist.

## Revendication

Circuit de ligne téléphonique comprenant:

— des première et seconde résistances d'alimentation (12, 13) pour fournir un courant continu d'excitation à partir des sorties de premier et second amplificateurs différentiels (20, 40) aux bornes respectives du conducteur relié à l'extrémité d'une fiche polaire et du conducteur relié au manchon de fiche de jack (2, 3) d'une ligne téléphonique;

— un premier diviseur de tension (14) étant connecté entre la borne du conducteur relié au manchon de fiche de jack et la sortie du premier amplificateur différentiel et définissant une première prise de tension, et un second diviseur de tension (15) étant connecté entre la borne du conducteur reliée à l'extrémité d'une fiche bipolaire et la sortie du second amplificateur différentiel et définissant une seconde prise de tension,

— un moyen de commande (60) étant couplé aux amplificateurs différentiels pour provoquer le fonctionnement des amplificateurs différentiels avec une impédance de sortie prédéterminée dans la bande vocale, le moyen de commande comprenant un amplificateur (71) ayant une entrée différentielle qui est connectée aux prises de tension et un circuit de réaction en courant alternatif (78) d'où il résulte que l'impédance de sortie prédéterminée dans la bande vocale est fonction des valeurs des résistances des diviseurs de tension et de l'impédance des circuits de réaction en courant alternatif;

caractérisé en ce que:

— le moyen de commande est couplé en courant continu entre les prises de tension et les amplificateurs différentiels et comprend un circuit de réaction en courant continu (79), d'où il résulte que les amplificateurs différentiels sont également amenés à fonctionner avec une résistance de sortie prédéterminée en courant continu, la résistance de sortie étant fonction des valeurs des résistances des prises de tension et du circuit de réaction en courant continu.

FIG. I

0 096 473

FIG. 2

2

FIG. 3